# EUROPÄISCHE PATENTANMELDUNG

(11) **EP 3 278 955 A1**
(43) Veröffentlichungstag der Anmeldung: **07.02.2018**
(21) Anmeldenummer: 17176011.9
(22) Anmeldetag: 14.06.2017
(51) Int. Cl.: B29C 64/10, B29C 64/209, B29C 64/223, B33Y 10/00, B33Y 30/00

(54) **SCHICHTWEISER AUFBAU VON FORMKÖRPERN MIT GENERATIVEM FERTIGUNGSVERFAHREN**

(30) Priorität: 17.06.2016 CH 7792016
(71) Anmelder: Hirschberg Engineering, 8408 Winterthur (CH)
(72) Erfinder: HIRSCHBERG, Sebastian, 8408 Winterthur (CH)
(74) Vertreter: Spillmann, Hannes

(57) **Zusammenfassung**

Ein Verfahren zur Herstellung von Formkörpern aus mindestens einer Formkörperschicht (6), umfassend die Schritte a) Bereitstellen eines Schichtträgers (7) zur Aufnahme mindestens einer Formkörperschicht (6); b) Erzeugen einer Formkörperschicht (6) auf einer Druckplatte (1), wobei die Formkörperschicht (6) wenigstens teilweise, insbesondere vollständig, durch ein generatives Fertigungsverfahren hergestellt wird; c) Positionieren von Druckplatte (1) und Schichtträger (7) oder älterer Formkörperschicht relativ zueinander; d) Aushärten der Formkörperschicht (6), so dass sie eine ältere Formkörperschicht bildet und Übertragen der Formkörperschicht (6); e) Eventuell Bereitstellen der Druckplatte (1) zur Aufnahme weiterer Formkörperschichten und wiederholen der Schritte b) bis d). Desweiteren eine zur Durchführung des Verfahrens geeignete Vorrichtung (11) sowie die Verwendung daraus resultierender Formkörper.

## Beschreibung

### Technisches Gebiet

Die vorliegende Erfindung betrifft Verfahren zur Herstellung von Formkörpern aus mindestens einer Formkörperschicht. Sie betrifft weiter Vorrichtungen zur Herstellung eines Formkörpers aus mindestens einer Formkörperschicht sowie die Verwendung besagter Formkörper, alles gemäss den Oberbegriffen der unabhängigen Ansprüche.

### Stand der Technik

Beim 3-D-Druck handelt es sich um Fertigungsverfahren, um dreidimensionale Werkstücke schrittweise und automatisch aufzubauen. Üblicherweise wird beim 3-D-Druck aus einem Ausgangsmaterial eine vordefinierte Form erzeugt. Typische im 3-D-Druck verwendete Materialien sind Kunststoffe, Harze, Keramiken und Metalle. Insbesondere beim gegenwärtig sehr aktuellen Rapid-Prototyping sollen möglichst ohne manuellen Aufwand eine Vielzahl an möglichen Formen und Strukturen hergestellt werden. Dabei steht die Vielseitigkeit der druckenden Maschine im Vordergrund, um aus der formbaren Masse als Ausgangsmaterial eine vom Anwender computergestützt definierte Form strukturell und schrittweise zu replizieren. Diese Vorrichtungen und Verfahren richten sich, wie der Name schon sagt, auf die Herstellung von "Prototypen", also weitgehend Einzelstücke. Entsprechend sind die meisten Vorrichtungen und Verfahren für eine industrielle Massenfertigung ungeeignet, da sie keine grossen Umsatzzahlen aufweisen und material- und energieaufwendig sind.

Es besteht somit ein Bedürfnis, Verfahren und Vorrichtungen bereitzustellen, um einen schichtweisen Aufbau dreidimensionaler Strukturen effizient und industriell skalierbar zu ermöglichen.

Neben dem für das Rapid Prototyping interessanten Anwendungsgebiet der Herstellung von Prototypen, Unikaten und Visualisierungen kann der 3-D-Druck verwendet werden, um industriell und technisch einsetzbare Formteile zu erstellen. In der WO 2014/043823 A1 (Hirschberg Engineering) sind solche Formkörper gezeigt. Diese Formkörper weisen verzweigte Stege und Schichten auf, die besonders für Anwendungen bei strömungsgetriebenen Prozessen geeignet sind. Unter anderem können die gezeigten Formkörper als statische Mischer oder Wärmetauscher oder zur Emulgierung oder Schäumung von Substanzen oder als katalytische Oberflächen bei chemischen Reaktionen verwendet werden. Hergestellt werden die Formkörper, indem eine plastisch verformbare Masse durch eine Schablone schichtweise aufgetragen wird. Die Schichten können schrittweise oder am Ende, nachdem der fertige Formkörper besteht, gehärtet werden. Dabei wird jede Schicht durch eine passende zugehörige Schablone auf die vorangegangene Schicht aufgetragen. Gehärtet wird mittels Trocknung, UV-Härtung oder anderweitig induzierter Härtung. Dabei bestimmen die Ausnehmungen der als Maske oder Sieb verwendeten Schablone die Form der jeweiligen Schichten.

### Darstellung der Erfindung

Ausgehend von diesem bekannten Stand der Technik und dem oben genannten Bedürfnis ist es eine Aufgabe der vorliegenden Erfindung, ein Verfahren zum schichtweisen Aufbau von Formkörpern mit mindestens einer Formkörperschicht bereitzustellen, welches besonders geeignet ist, um industriell automatisiert zu werden und insgesamt effizienter ist. Insbesondere soll ein Verfahren bereitgestellt werden, welches für die Massenproduktion geeignet ist.

Die Lösung mindestens einer der genannten Aufgaben ist durch den kennzeichnenden Teil der unabhängigen Ansprüche definiert.

Ein Aspekt der vorliegenden Erfindung betrifft ein Verfahren zu Herstellung von Formkörpern aus mindestens einer Formkörperschicht. Das erfindungsgemässe Verfahren umfasst eine Reihe von Schritten. In einem ersten Schritt wird ein Schichtträger zur Aufnahme mindestens einer Formkörperschicht bereitgestellt. Eine Formkörperschicht wird auf eine Druckplatte aufgetragen, wobei die Formkörperschicht wenigstens teilweise, insbesondere vollständig, durch ein generatives Fertigungsverfahren hergestellt oder auf diese besagte Druckplatte aufgetragen wird. Grundsätzlich sei festgehalten, dass im Kontext der vorliegenden Erfindung Verfahrensschritte, welche nicht logisch zwingend aufeinanderfolgen müssen, oder bei denen eine Abfolge nicht explizit erwähnt ist, nicht ausschliesslich in der in der vorliegenden Aufzählung erfolgenden Reihenfolge ablaufen müssen. In diesem konkreten Fall kann das Bereitstellen des Schichtträgers zum Beispiel zeitgleich mit dem Auftragen der Formkörperschicht auf die Druckplatte stattfinden. Das erfindungsgemässe Verfahren umfasst weiter den Schritt, dass die Druckplatte und der Schichtträger relativ zueinander positioniert werden. Zu diesem Zeitpunkt kann auf dem Schichtträger bereits eine erste oder eine Mehrzahl älterer Formkörperschichten bestehen, die in vorgängigen Durchläufen des erfindungsgemässen Verfahrens auf diese übertragen wurden.

Grundsätzlich kann das erfindungsgemässe Verfahren mit einer einzigen Druckplatte durchgeführt werden. Es ist aber auch möglich, mehrere unterschiedliche Druckplatten zu verwenden, welche insbesondere simultan, nacheinander und/oder alternierend eingesetzt werden. Damit kann unter Umständen das Verfahren beschleunigt oder die Herstellung von komplexen Strukturen vereinfacht werden.

Im Sinne der vorliegenden Erfindung kann unter dem relativen Positionieren der Druckplatte verstanden werden, dass entweder die Druckplatte oder der Schichtträger oder beide eine Bewegung vollführen, bei der die Formkörperschicht auf der Druckplatte mit entweder dem Schichtträger oder einer allfällig darauf bereits vorhandenen älteren Formkörperschicht kontaktiert wird. Dabei werden bevorzugt Druckplatte und Schichtträger relativ zueinander so positioniert, dass die Formkörperschicht beim Übertrag von der Druckplatte auf den Schichtträger exakt wie gewünscht auf dem Schichtträger ausgerichtet ist.

In einem weiteren Schritt wird die Formkörperschicht ausgehärtet. Eine ausgehärtete Formkörperschicht wird im Kontext des erfindungsgemässen Verfahrens eine ältere Formkörperschicht oder geht mit einer bereits bestehenden älteren Formkörperschicht einen Verbund ein. Dieser Aushärtungsschritt kann insbesondere zu dem Zeitpunkt stattfinden, in dem die Druckplatte und der Schichtträger relativ zueinander positioniert sind. In diesem Zustand können Schichtträger und Druckplatte mechanische Stützen für die noch nicht ausgehärtete Formkörperschicht bilden.

Entsprechend kann die Formkörperschicht des aktuellen Verfahrensschrittes auf eine oder mehrere ältere Formkörperschicht(en) übertragen werden, wobei entsprechend die Druckplatte oder die älter(en) Formkörperschicht(en) relativ zueinander positioniert sind. Ein Übertragen der Formkörperschicht beinhaltet ein Ablösen von der Druckplatte. Für spätere Durchläufe wird die gehärtete, übertragene Formkörperschicht somit zu einer älteren Formkörperschicht. Im Sinne der vorliegenden Erfindung ist eine ältere Formkörperschicht im Verhältnis zur aktuellen Formkörperschicht definiert. Das heisst, jede einer Formkörperschicht vorangegangene Formkörperschicht ist bezüglich dieser eine ältere Formkörperschicht. Alternativ können die Formkörperschichten bezüglich ihrer Anzahl durchnummeriert werden. So ist die erste auf einem Schichtträger übertragene Formkörperschicht die erste Formkörperschicht. Die zweite Formkörperschicht entsprechend die zweite, usw. Selbstredend wäre die erste Formkörperschicht bezüglich der zweiten die ältere Formkörperschicht. Die Anzahl durchlaufener Wiederholungen ist abhängig von der gewünschten Endform des resultierenden Formkörpers und kann vom Fachmann individuell gewählt werden. Entsprechend umfasst der letzte Schritt des erfindungsgemässen Verfahrens das eventuelle Bereitstellen der Druckplatte zur Aufnahme weiterer Formkörperschichten und das anschliessende Wiederholen der oben genannten Verfahrensschritte. In einer besonderen Ausführungsform ist eine ältere Formkörperschicht zugleich eine gehärtete Formkörperschicht.

Im Sinne der vorliegenden Erfindung ist der aus dem erfindungsgemässen Verfahren resultierende Formkörper insofern aus mindestens einer Formkörperschicht aufgebaut, als dass diese ein direktes Resultat aus dem Verfahren ist. Grundsätzlich sind die resultierenden Formkörper aber nicht auf die nach Abschluss des Prozesses bedingte Erkennbarkeit der einzelnen Formkörperschichten beschränkt. Auch sind die resultierenden Formkörper nicht auf rechtwinklige, flache Schichten oder Schichten homogener Dicke beschränkt.

Mit dem erfindungsgemässen Verfahren können Formkörperschichten oder Teile davon rasch automatisiert aufgebaut und aufgetragen werden. Dadurch eignet sich das erfindungsgemässe Verfahren besonders gut für die Massenproduktion.

Der Begriff "generatives Fertigungsverfahren" bzw. "generative Fertigung" bezeichnet Verfahren, bei welchen durch gezielte räumliche Ablagerung, Aufbringung und/oder Verfestigung von Material ein räumliches Objekt erzeugt wird. Vorliegend besteht das räumliche Objekt aus einer Formkörperschicht. Die Ablagerung, Aufbringung und/oder Verfestigung des Materials erfolgt dabei insbesondere anhand eines Datenmodells des zu erzeugenden Objekts oder der Formkörperschicht und insbesondere lageweise. Jede einzelne Formkörperschicht kann somit im generativen Fertigungsverfahren aus einer oder mehreren Lagen hergestellt werden. Üblicherweise wird zur Fertigung eines Objekts oder einer Formkörperschicht ein formloses Material (z.B. aus Flüssigkeiten, Pulver, Granulate, etc.) und/oder ein formneutrales Material (z.B. Bänder, Drähte) verwendet, welches insbesondere chemischen und/oder physikalischen Prozessen (z.B. Schmelzen, Polymerisieren, Sintern) unterzogen wird. Generative Fertigungsverfahren sind dem Fachmann an sich bekannt und werden unter anderem auch als "Additive Fertigungsverfahren" oder "Additive Manufacturing" bezeichnet.

Insbesondere handelt es sich beim generativen Fertigungsverfahren um ein werkzeuglos und/oder formlos durchgeführtes Verfahren. Im Besonderen wird für das generative Fertigungsverfahren keine Gussform und/oder kein formgebendes Werkzeug verwendet.

Grundsätzlich kann es sich beim generativen Fertigungsverfahren insbesondere um ein Pulverbettverfahren, ein Freiraumverfahren und/oder ein Flüssigmaterialverfahren handeln.

Bei den Pulverbettverfahren wird das zu verarbeitende Material in Pulverform in einer dünnen Schicht auf einer Grundplatte oder Druckplatte aufgebracht. Das zu verarbeitende Material wird sodann lokal verfestigt, insbesondere lageweise, so dass das zu erzeugende Objekt oder die Formkörperschicht generiert wird. Überschüssiges und nicht verfestigtes Pulver wird entfernt. Die Verfestigung des Pulvers kann durch gezielten lokalen Energieeintrag, z.B. mit einer elektromagnetischen Strahlungsquelle (beispielsweise einem Laser) oder einer Elektronenstrahlquelle, erreicht werden. Bekannt sind z.B. folgende Verfahren: selektives Laserschmelzen, Lasersintern, Elektronenstrahlschmelzen.

Auch möglich ist es, die Verfestigung durch gezielte lokale Einbringung eines chemischen Reaktanden, z.B. ein Bindemittel, in das Pulverbett zu bewirken. Bei Verwendung eines Bindemittels wird das Pulvermaterial an den ausgewählten Stellen mit dem Bindemittel verklebt und dadurch verfestigt. Dies wird auch als Binder Jetting bezeichnet.

Im Besonderen handelt es sich beim Pulverbettverfahren um selektives Laserschmelzen, Lasersintern, Elektronenstrahlschmelzen und/oder Binder Jetting. Beim Flüssigmaterialverfahren liegt das zu verarbeitende Material in flüssiger Form vor. Die Verfestigung erfolgt typischerweise durch gezielten lokalen Energieeintrag in die Flüssigkeit. Beispielsweise wird ein lichtaushärtendes Material von einem Laserstrahl gezielt lokal ausgehärtet. Als lichtaushärtendes Material werden z.B. Kunststoffe, insbesondere Photopolymere, wie zum Beispiel Acryl-, Epoxid- und/oder Vinylesterharze, eingesetzt. Insbesondere handelt es sich beim Flüssigmaterialverfahren um ein Stereolithographieverfahren.

Bei Freiraumverfahren wird das zu verarbeitende Material ausschließlich an solchen Stellen aufgebracht, wo das zu erzeugende Objekt oder die Formkörperschicht entstehen soll. Im Gegensatz zum Pulververfahren wird beim Freiraumverfahren somit nicht der komplette Bauraum mit zu verarbeitendem Material gefüllt. Das zu verarbeitende Material liegt als Rohmaterial insbesondere in einer festen Form, z.B. als Pulver, Filament und/oder Granulat vor. Auch möglich ist es, dass das zu verarbeitende Material in flüssiger Form vorliegt. Als Freiraumverfahren bekannt sind z.B. Schmelzschichtverfahren ("Fused Deposition Modeling") oder Extrusionsverfahren. Bei Schmelzschichtverfahren wird das zu verarbeitende Material, z.B. als Strang, durch eine Heizdüse gefördert und dabei soweit erhitzt, dass es schmilzt und durch die Düse extrudiert werden kann. Beim Extrusionsverfahren wird das zu verarbeitende Material, insbesondere eine plastisch verformbaren Masse, z.B. eine Paste, durch eine Düse ausgetragen und in einem nachfolgenden Schritt verfestigt und/oder ausgehärtet. Dabei kann auch auf eine Erhitzung verzichtet werden.

Mit Vorteil ist das generative Fertigungsverfahren ein Freiraumverfahren, insbesondere ein Schmelzschichtungsverfahren und/oder ein Extrusionsverfahren. Besonders bevorzugt sind Extrusionsverfahren. Diese Verfahren haben sich in Kombination mit den weiteren Verfahrensschritten des erfindungsgemässen Verfahrens als besonders geeignet herausgestellt. Zudem haben sie den Vorteil, dass nur diejenige Menge an zu verarbeitendem Material eingesetzt werden muss, welche für die Erzeugung des Objekts notwendig ist und keine Entfernung von überschüssigem Material, z.B. Pulver oder Flüssigkeit, erforderlich ist.

Insbesondere wird die Formkörperschicht auf der Druckplatte aus einer plastisch verformbaren Masse, insbesondere einer Paste, erzeugt. Mit anderen Worten wird im generativen Verfahren als zu verarbeitendes Material insbesondere eine plastisch verformbare Masse, im Speziellen eine Paste, eingesetzt. Derartige Pasten können insbesondere auch ohne Erhitzung verarbeitet werden und weisen bereits eine gewisse Formstabilität nach dem Auftragen auf. Nähere Angaben zu den plastischen Massen finden sich weiter unten. Es sind aber grundsätzlich auch nicht plastisch verformbare Materialen einsetzbar.

Besonders bevorzugt wird das generative Fertigungsverfahren mit einem in wenigstens zwei Raumdimensionen, insbesondere drei Raumdimensionen, bewegbaren Austragungsvorrichtung, im Besonderem einem bewegbaren Druckkopf, durchgeführt. Die Austragungsvorrichtung kann auch als Dispenser bezeichnet werden.

Die verwendete Austragungsvorrichtung ist dabei insbesondere in einer zur Druckplatte coplanaren Ebene bewegbar. Optional kann die Druckplatte dabei in einer Richtung senkrecht zur Ebene der Druckplatte bewegbar ausgestaltet werden. Damit können nahezu beliebige Objekte oder Formkörperschichten auf der Druckplatte hergestellt werden. In einer weiteren bevorzugten Ausführungsform ist die Austragungsvorrichtung zusätzlich in einer Richtung senkrecht zur Ebene der Druckplatte bewegbar. Durch derartig bewegbare Austragungsvorrichtungen können auf der Druckplatte nahezu beliebig geformte Objekte ausgebildet werden.

Die verwendete Austragungsvorrichtung umfasst insbesondere wenigstens eine Düse zum Austragen des zu verarbeitenden Materials, insbesondere einer plastisch verformbaren Masse. Gemäss einer weiteren vorteilhaften Ausführungsform umfasst die im Verfahren verwendete Austragungsvorrichtung mehrere, insbesondere 2 - 256 oder 32 - 128, individuell adressierbare und/oder individuell bewegbare Düsen. Damit kann die Herstellung der Formkörperschicht weiter beschleunigt werden.

Die Austragungsvorrichtung ist im Besonderen so ausgestaltet, dass sie das auszutragende Material in einzelnen Tropfen mit einem Volumen von 0.1 - 100 pL, insbesondere 1 - 50 pL, austragen kann.

Die Austragungsvorrichtung verfügt mit Vorteil über einen Temperaturkontroller mit welchem eine Temperatur des auszutragenden Materials und/oder einer Düse kontrolliert werden kann.

Besonders bevorzugt handelt es sich bei der Austragungsvorrichtung um einen Tintenstrahldrucker, einen Plotter, einen 2D-Drucker und/oder um einen 3D-Drucker.

Im Besonderen weist das zu verarbeitende Material oder die plastisch verformbare Masse eine Viskosität von 10 - 10⁶ mPa·s, bevorzugt 100 - 10⁵ mPa·s auf. Viskositäten werden im vorliegenden Zusammenhang insbesondere bei 25°C bestimmt, bevorzugt nach der Brookfield-Methode und im Besonderen nach DIN EN ISO 2555:2000-01.

Gemäss einer weiteren vorteilhaften Ausführungsform wird das zu verarbeitende Material, insbesondere eine plastisch verformbare Masse, vor Schritt b) mit einem Lösungsmittel, insbesondere Wasser, verdünnt. Dies mit Vorteil so, dass eine Viskosität des verdünnten zu verarbeitenden Materials oder der plastisch verformbaren Masse reduziert wird, im Besonderen so dass die Viskosität im Bereich von 10 - 10⁶ mPa·s, bevorzugt 100 - 10⁵ mPa·s, liegt. Damit kann die Austragung des zu verarbeitenden Materials durch vorstehend genannte Austragungsvorrichtungen erleichtert werden.

Das Lösungsmittel wird mit Vorteil auf die chemische Zusammensetzung des zu verarbeitenden Materials, insbesondere der plastisch verformbaren Masse, abgestimmt. Im Besonderen handelt es sich aber um Wasser, Alkohole, z.B. Ethanol, und/oder organische Lösungsmittel.

In einer besonderen Ausführungsform wird das zu verarbeitende Material, insbesondere die plastisch verformbare Masse, nach erfolgter Austragung mit der Austragungsvorrichtung während und/oder nach Schritt b), einem Trocknungsprozess unterzogen. Der Trocknungsprozess erfolgt dabei mit Vorteil noch vor Schritt c). Unter einem Trocknungsprozess ist ein Verfahren zu verstehen, bei welchem ein Anteil an Lösungsmittel und/oder von anderen flüssigen Bestandteilen in der plastisch verformbaren Masse reduziert wird. Damit kann insbesondere ein Verlaufen von dünnflüssigem und/oder vorgängig verdünntem zu verarbeitendem Material, insbesondere plastisch verformbarer Masse, verhindert werden.

In einer anderen vorteilhaften Ausführungsform wird die Formkörperschicht in Schritt b) teilweise durch ein generatives Fertigungsverfahren und teilweise durch ein formgebendes Werkzeug auf die Druckplatte aufgetragen. Dadurch können beispielsweise unterschiedliche Bereiche einer Formkörperschicht durch eine optimale auf die Struktur im jeweiligen Bereich angepasste Methode und/oder aus unterschiedlichen Materialen erzeugt werden. So können beispielsweise komplexe Strukturelemente einer Formkörperschicht durch das generative Verfahren erzeugt werden, während einfachere Elemente durch das formgebende Werkzeug aufgebracht werden. Dies kann der Effizienz des Verfahrens insgesamt zu Gute kommen.

Auch kann es Vorteilhaft sein, wenn das erfindungsgemässe Verfahren zusätzlich einen weiteren Schritt b') umfasst, bei welchem eine Formkörperschicht durch ein formgebendes Werkzeug auf die Druckplatte aufgetragen wird. Schritt b') kann dabei vor und/oder nach einer ersten Durchführung der Schritte a) bis d) erfolgen, zum Beispiel in der Schrittabfolge a), b'), c) und d). Dadurch können einzelne Formkörperschichten gänzlich durch ein formgebendes Werkzeug hergestellt werden. Auch diese Massnahme kann je nach herzustellender Struktur dazu beitragen, das Verfahren insgesamt zu beschleunigen.

In einer besonderen Ausführungsform des erfindungsgemässen Verfahrens ist das formgebende Werkzeug, falls eingesetzt, eine Schablone. Die Schablone kann so ausgestaltet sein, dass sie als ebene Fläche über der Druckplatte positionierbar ist. Ausnehmungen in der Schablone definieren die Form der durch die entsprechenden Schablonen aufgetragenen Formkörperschicht und/oder die Form von Teilbereichen der Formkörperschicht. Eine Schablone oder ein formgebendes Werkzeug kann eine Vielzahl identischer oder unterschiedlicher Formen für Formkörperschichten und/oder Teilbereiche von Formkörperschichten definieren.

In einer besonderen Ausführungsform ist das formgebende Werkzeug ein Sieb, insbesondere ein Sieb für den technischen Siebdruck.

Ein weiterer Vorteil des erfindungsgemässen Verfahrens ist, dass der Schritt des Auftragens der Formkörperschicht auf den Schichtträger indirekt erfolgt, das heisst, dass zunächst von einer Druckerplatte die Formkörperschicht mit bereits definierter Form auf den Schichtträger übertragen wird. Dank dieses indirekten Druckverfahrens kann im vorliegenden Verfahren auch eine Kombination aus generativen Fertigungsverfahren und Druckverfahren mit formgebenden Werkzeugen, z.B. Sieb- und Schablonendruck, angewandt werden.

In einer besonderen Ausführungsform ist die Druckplatte eben ausgestaltet. Dies vereinfacht den Aufbau von Formkörperschichten im Allgemeinen. Werden die Formkörperschichten oder Teile davon mit einem zusätzlichen formgebenden Werkzeug hergestellt, hat dies den weiteren Vorteil, dass besonders für Schablonendruck eine perfekt ebene Unterlage besonders gute Druckresultate bei den einzelnen Formkörperschichten liefert. Aber auch beim Siebdruck ist eine ebene Druckplatte von Vorteil für das Druckresultat der einzelnen Formkörperschichten.

Ohne an diese Theorie gebunden zu sein, scheint einer der erfindungsgemässen Vorteile darin zu liegen, dass die Druckplatte den Formkörperschichten zusätzlichen Halt gibt, bis sie ausgehärtet sind. Dadurch ist es möglich, komplexere Muster zu drucken, die nicht vollständig auf älteren Formkörperschichten aufliegen müssen.

In einer besonderen Ausführungsform ist die Druckplatte so ausgestaltet, dass die Formkörperschicht darauf schlecht haftet. Die Formkörperschicht wird von der Druckplatte auf den Schichtträger oder die ältere Formkörperschicht übertragen. Um die Übertragung zu erleichtern ist es von Vorteil, wenn die Formkörperschicht nicht übermässig an der Druckplatte haftet. Die Haftung einer ausgehärteten Paste auf einer Oberfläche hängt von der Oberflächenform sowie von der Paarung Oberfläche - Paste ab. Für geringe Haftung muss eine chemische Verbindung der Paste mit der Oberfläche ausgeschlossen werden, die Struktur der Oberfläche glatt sein und die Oberfläche eine möglichst niedrige Oberflächenenergie aufweisen. Oberflächenenergien kleiner als 40 mN/m, insbesondere Oberflächenenergien kleiner als 30 mN/m und insbesondere Oberflächenenergien kleiner als 20 mN/m gelten im Sinne der vorliegenden Anmeldung als niedrig.

In einer besonderen Ausführungsform ist das Material der Druckplatte so ausgestaltet, dass die Formkörperschicht darauf schlecht haftet. Zusätzlich oder in einer alternativen Ausführungsform kann die Oberfläche der Druckplatte dergestalt bearbeitet sein, dass sich die Formkörperschicht im entsprechenden Übertragungsschritt leicht ablöst. Grundsätzlich ist dies durch eine Oberflächenbehandlung der Druckplatte möglich. Diese Oberflächenbehandlung kann permanent sein, das heisst, die Druckplatte ist mit einer entsprechenden Oberflächenbehandlung versehen, die bereits im Fertigungsprozess der Druckplatte stattgefunden hat. Alternativ oder zusätzlich kann die Druckplatte mit einem temporären System der Oberflächenbehandlung ausgestattet sein. Es ist zum Beispiel möglich, die Druckplatte mit einem Wachs oder Harz oder einem Pulver zu beschichten, welches sich im Verlauf der Anwendungen der Druckplatte verbraucht und wiederholt aufgetragen werden muss. Entsprechend können in einer Vorrichtung zur Durchführung des erfindungsgemässen Verfahrens Strukturen vorgesehen sein, welche diese Beschichtung jeweils in periodischen Abständen oder vor jeder Anwendung der Druckplatte vornehmen.

In einer besonderen Ausführungsform ist das Haftverhalten der Druckplatte mittels Einbrennsilikonisierung gesenkt. In einer alternativen besonderen Ausführungsform ist die Druckplatte mit einer Beschichtung, welche Fluorpolymere enthält, versehen.

In einer besonderen Ausführungsform ist das Haftverhalten der Druckplatte mittels einer Schicht Polydimethylsiloxan oder anderer Polysilane gesenkt.

In einer besonderen Ausführungsform wird vor jeder Anwendung eine dünne Beschichtung auf die Druckplatte aufgebracht. In einer bevorzugten Ausführungsform werden fett- oder wachshaltige Schichten vor jeder Anwendung auf die Druckplatte aufgebracht.

Alternativ können auch Trockenschmiermittel oder Trockengleitschichten, wie sie aus der Trockenschmierung von Gleitlagern bekannt sind, verwendet werden, um die Hafteigenschaften der Druckplatte zu senken. Bevorzugt sind transparente Trockengleitschichten basierend auf synthetischen Wachsen.

In einer besonderen Ausführungsform werden thermisch behandelte Silikatschichten verwendet. Wasserlösliche Natronsilikate, Lithiumsilikate oder Kaliumsilikate können in flüssiger Form aufgetragen werden und erstarren beim Trocknen zu glasartigen, amorphen Schichten. Besonders wenn Pasten mit Acrylbasierten Photopolymeren zur Bildung der Formkörperschichten verwendet werden, hat es sich überraschend gezeigt, dass eine Beschichtung der Druckplatte mit einer dünnen Schicht Natronsilikat, welche vor dem Einsatz in einem Ofen für eine halbe Stunde auf rund 100°C erhitzt wird, besonders gute Ergebnisse liefert.

In einer besonderen Ausführungsform wird die ältere Formkörperschicht auf dem Schichtträger oder der Schichtträger selbst in einem Verfahrensschritt mit einem Haftvermittler versehen, bevor eine nächste weitere Formkörperschicht darauf übertragen wird. Bevorzugt umfasst dieser Schritt ein Eintunken, Besprühen oder Benetzen mittels eines Stempelkissens des Schichtträgers mit besagtem Haftvermittler.

Ein Haftvermittler kann dazu führen, dass die Verbindung zwischen der aktuellen Formkörperschicht und der älteren Formkörperschicht verbessert wird. Dazu wird die Stirnfläche der älteren Formkörperschicht, welche bereits ausgehärtet ist, zum Beispiel mit einem dünnflüssigen Haftvermittler benetzt. Je nach verwendetem Material können verschiedene Haftvermittler eingesetzt werden. Insbesondere bei Pasten die auf Photopolymeren basieren können zum Beispiel Monomere ohne Photoinitiator verwendet werden, die nur im Kontakt mit den Pasten vernetzen, die den entsprechenden Photoinitiator enthalten. Wo die neue Formkörperschicht die ältere schon ausgehärtete Formkörperschicht nicht berührt, bleibt dieser Haftvermittler auch unter der Wirkung der UV Strahlung flüssig. Bei Acryl-basierten Photopolymeren und deren dünnflüssigen Monomeren können alternativ auch dem als Haftvermittler eingesetzten Monomer Photoinitiatoren beigemischt werden. Die dünnen Monomerschichten härten in diesem Fall nicht aus, wenn sie nicht durch die Paste der neuen Formkörperschicht überdeckt werden, da bei den sehr dünnen Haftvermittlerschichten die Polymerisation durch den Sauerstoff in der Luft inhibiert wird. In einer besonderen Ausführungsform des erfindungsgemässen Verfahrens wird ein zu verarbeitendes Material, insbesondere eine plastisch verformbare Masse, durch die Ausnehmungen des formgebenden Werkzeugs auf die Druckplatte zur Bildung der Formkörperschicht oder Teilbereichen davon aufgetragen. Geeignete zu verarbeitende Materialien, insbesondere plastisch verformbare Massen, können vom Fachmann je nach gewünschtem Anwendungsgebiet, dem anvisierten Härtungsprozess und der Materialverfügbarkeit gewählt werden.

Bevorzugt weisen die zu verarbeitenden Materialien, insbesondere plastisch verformbare Massen, für Verwendung in den generativen Fertigungsverfahren und/oder für den Druck durch die optionalen formgebenden Werkzeuge geeignete rheologische Eigenschaften auf. Besonders bevorzugt sind formbare Massen, die thixotrope Eigenschaften aufweisen. Solche formbaren oder plastisch verformbaren Massen fliessen unter Scherbeanspruchung gut, sind aber zusätzlich auf der Druckplatte formstabil. Besonders geeignet sind Suspensionen. Suspensionen können als Hauptbestandteil feinkörniges Pulver aufweisen, welches entsprechend des Materials des gewünschten Formkörpers gewählt wird. Geeignet sind zum Beispiel Metalle, Metalllegierungen, Edelstahl oder Edelmetalle sowie Keramiken und/oder Glaskeramiken. Zur Bildung eines plastisch verformbaren Werkstoffs werden insbesondere organische Binder zugegeben. Materialien, die zum Beispiel als organische Binder verwendet werden können, sind u. a. CMC (Carboxymethylcellulose), Polyolefin sowie verschiedene Formen natürlicher Stärke (Maismehl, Weizenmehl etc.). Alternativ können als organische Binder verschiedene Typen von Photopolymeren eingesetzt werden. Als Photopolymere werden Monomere und Oligomere sowie Mischungen davon bezeichnet, die durch die Wirkung eines in geringen Mengen von typischerweise weniger als 5% beigemischten Photoinitiators durch Lichtstrahlung, typischerweise im ultravioletten Bereich, zu polymerisieren beginnen. Es existiert eine grosse Zahl von unterschiedlichen Photopolymeren. Bevorzugt werden Acrylmonomere, wie unter anderem zum Beispiel Hexan-1,6-Diol-Diacrylat, Trimethylpropantriacrylat, Poly (Ethylen Glycol) Diacrylat, die mit geringen Mengen Photoinitiatoren wie unter anderem zum Beispiel 0.5% 2,2-Dimethoxy-2-Phenylacetophenone versetzt wurden, als Bindermaterial in Frage. Je nach Anforderungen können diese Monomere mit unterschiedlichen Oligomeren von Polyacrylaten gemischt werden.

Ist das zu verarbeitende Material, insbesondere eine plastisch verformbare Masse, für einen Sinterschritt vorgesehen, was zum Beispiel bei Keramiken, Metallen oder Glas häufig der Fall ist, enthält sie einen volumenmässig hohen Anteil des zu sinternden Pulvers, insbesondere von >35 Volumenprozent, weiter insbesondere > 50 Volumenprozent.

In einer besonderen Ausführungsform weisen die zu verarbeitenden Materialien, insbesondere plastisch verformbare Massen, zusätzliche Additive auf, welche verwendet werden können, um die rheologischen Eigenschaften der Materialien zu ändern, wie zum Beispiel Dispersionshilfsmittel. Solche Zusätze sind dem Fachmann bekannt und können von ihm situativ an die erforderlichen Bedingungen angepasst ausgewählt werden (Journal of Engineering, Volume 2013 (2013), Article ID 930832).

In einer alternativen besonderen Ausführungsform umfasst das zu verarbeitende Material, insbesondere die plastisch verformbare Masse, reine Kunststoffteile. Diese können entsprechende Monomere und/oder Oligomere aufweisen, die später polymerisiert werden. Solche zu verarbeitende Materialien, insbesondere plastisch verformbare Massen, können auch zusätzliche Additive zur Einstellung der rheologischen Eigenschaften, sowie Lösungsmittel, Pigmente, Katalysatoren oder Biozide enthalten.

In einer besonderen Ausführungsform kann das zu verarbeitende Material, insbesondere die plastisch verformbare Masse, Pulver eines Grundwerkstoffs als Suspension enthalten, ausgewählt aus der Gruppe bestehend aus: Metalle, Stahllegierungen, Hartmetalle, Buntmetalle, Edelmetalle, Keramiken, Metall-Keramik-Verbundwerkstoffe, Glas, Kunststoffe und/oder Kunststoff-Verbundwerkstoffe mit Faserverstärkung oder Metall- oder Keramikpartikeln. Auch Gemische aus diesen Materialien sind denkbar.

In einer besonderen Ausführungsform wird eine Formkörperschicht aus mehreren Teil-Formkörperschichten aufgebaut, die simultan und/oder nacheinander einzeln auf die Druckplatte und/oder auf mehrere unterschiedliche Druckplatten gedruckt werden. Dabei können die Teilformkörperschichten mit einem generativen Fertigungsverfahren und/oder mit einem formgebenden Werkzeug erzeugt werden.

Insbesondere kann eine erste Teil-Formkörperschicht auf einer ersten Drucklatte mit einem generativen Fertigungsverfahren und eine zweite Teil-Formkörperschicht mit einem formgebenden Werkzeug auf einer zweiten Druckplatte erzeugt werden. Sodann werden die Teil-Formkörperschichten simultan und/oder nacheinander in Schritt c) des Verfahrens positioniert und in Schritt d) ausgehärtet. Die einzelnen Teil-Formkörperschichten können dabei aus derselben oder aus unterschiedlichen Pasten bestehen, wodurch sich Formkörperschichten erstellen lassen, die aus mehreren unterschiedlichen Materialien aufgebaut sind.

In einer besonderen Ausführungsform wird eine Mehrzahl an plastisch verformbaren Massen mit verschiedenen Eigenschaften durch (i) verschiedene Vorrichtungen zur Durchführung des generativen Fertigungsverfahrens, (ii) durch wenigstens eine Vorrichtung zur Durchführung des generativen Fertigungsverfahrens und durch wenigstens ein formgebendes Werkzeug und/oder (iii) durch wenigstens ein formgebendes Werkzeug mit verschiedenen Ausnehmungen des formgebenden Werkzeugs auf die Druckplatte zur Bildung der Formkörperschicht aufgetragen. Dadurch kann eine Formkörperschicht gebildet werden, welche aus unterschiedlichen Materialien besteht.

Diese Ausführungsformen können zum Beispiel im gewünschten Endprodukt, also Formkörper, so vorgesehen sein. Eine weitere mögliche Anwendung wäre es, ein oder mehrere zusätzliche Materialien zu verwenden, welche später modifiziert werden. Diese können als Füll- oder Stützstrukturen verwendet werden, welche dem im Aufbau befindlichen Formkörper während des Aufbauprozesses eine bessere Stabilität verleihen. Später können diese Füll- oder Stützstrukturen mittels mechanischer, chemischer oder thermischer Verfahren wieder aus dem Formkörper entfernt werden.

Wird als zu verarbeitendes Material oder plastisch verformbare Masse ein Sintermaterial aus der oben geschilderten Gruppe verwendet, wie zum Beispiel Metalle, Metalllegierungen, Keramik, Glas oder Verbunde dieser Materialien, so umfasst das erfindungsgemässe Verfahren mit Vorteil eine thermische Behandlung des Formkörpers zur Sinterung, die nach dem Abschluss des formgebenden Prozesses des Formkörpers durchgeführt wird.

In einer bevorzugten Ausführungsform wird der Formkörper bei Temperaturen von zwischen 500 und 2500 °C, vorzugsweise zwischen 600 und 1700 °C gesintert.

In einer besonderen Ausführungsform ist der Schichtträger so ausgestaltet, dass die Formkörperschichten an ihm gut haften. Das kann durch die Wahl des Materials des Schichtträgers oder durch eine Beschichtung des Schichtträgers gesteuert werden. Falls der Schichtträger nicht in einer auf den Aufbau des Formkörpers folgenden thermischen Behandlung mit verwendet werden soll, ist zum Beispiel eine Aluminiumlegierung ein geeigneter Werkstoff für Schichtträger für Pasten mit Acryl-basierten Photopolymeren.

In einer besonderen Ausführungsform, welche einen Sinterschritt umfasst, ist der Schichtträger so ausgestaltet, dass er als Träger für den Sinterprozess geeignet ist. Dazu muss der Schichtträger so ausgestaltet sein, dass er die Temperaturen, welche im Sinterschritt erzeugt werden, unbeschadet übersteht. Bevorzugt ist der Schichtträger aus einem keramischen Material, wie zum Beispiel Aluminiumoxid, Korund, Siliziumcarbid oder Saphir. Alternativ kann auch Graphit oder Kohlefaser als Material für den Schichtträger verwendet werden. Während des Druckverfahrens muss die Formschicht auf dem Schichtträger gut haften. Falls der Formkörper am Ende des Herstellverfahrens gesintert werden soll und der Schichtträger als Sinterunterlage bei dem Sinterverfahren mit verwendet werden soll, muss der erzeugte Formkörper vom Schichtkörper gelöst werden, damit sich der Formkörper relativ zum Schichtträger unbehindert ausdehnen resp. insbesondere schrumpfen kann. Bevorzugt ist zu diesem Zweck der Schichtträger mit einer Beschichtung versehen. Besonders bevorzugt ist der Schichtträger mit einer Polivinylbutyral (PVB) Schicht versehen. Zu Beginn des Sinterprozesses mit Temperaturen zwischen 500 bis 600 °C löst sich diese Beschichtung im Wesentlichen rückstandslos auf und ermöglicht so im darauf folgenden Verlauf des Sinterprozesses ein ungehindertes Schrumpfen des Formkörpers.

In einer besonderen Ausführungsform weist das erfindungsgemässe Verfahren einen Polymerisationsschritt auf. Bevorzugt handelt es sich um einen Polymerisationsschritt ausgewählt aus der Gruppe bestehend aus: photoinduzierter, thermoinduzierter und/oder chemoinduzierter Polymerisation.

Besonders bevorzugt weist das erfindungsgemässe Verfahren einen Photopolymerisationsschritt auf. Bei diesem Schritt wird eine Formkörperschicht auf der Druckplatte und in Kontakt mit dem Schichtträger oder den älteren, schon ausgehärteten Formträgerschichten ausgehärtet. Zu diesem Zweck wird das entsprechend ausgewählte zu verarbeitende Material, insbesondere die entsprechend ausgewählte plastisch verformbare Masse, mit Licht der entsprechenden Wellenlänge beaufschlagt, um die Polymerisationsreaktion zu starten. Dazu wird dem zu verarbeitenden Material ein entsprechender Zusatz an Photopolymeren zugegeben. Diese Beaufschlagung des zu verarbeitenden Materials, insbesondere der plastisch verformbaren Masse, der Formkörperschicht findet bevorzugt durch die Druckplatte statt. Dazu muss die Druckplatte für das Licht entsprechender Wellenlänge transparent sein. Dabei wird je nach eingesetztem Photoinitiator eine unterschiedliche Wellenlänge erforderlich. In der Regel wird die Photopolymerisation mit kurzwelligem Licht, also Licht im ultravioletten Spektrum initiiert. Als geeignet hat sich eine Druckplatte aus Quarzglas oder Saphirglas erwiesen. Bevorzugt ist die Druckplatte aus einem Material gewählt, welches über einen längeren Zeitraum ihre Durchlässigkeit für UV-Licht nicht ändert.

In einer alternativen Ausführungsform kann die Aushärtung der Formkörperschicht durch einen physikalischen Prozess erfolgen, wie zum Beispiel der Trocknung und/oder der Abkühlung. In einem konkreten Beispiel würde als das zu verarbeitende Material als Schmelze aufgetragen, welche nach Abkühlung verfestigt. Somit liesse sich das erfindungsgemässe Verfahren auch mit einem Thermoplasten als zu verarbeitendes Material oder plastisch verformbare Masse durchführen. Alternativ könnte das Aushärten mittels einer Trocknung und/oder Komplexierung und/oder Kristallisation stattfinden, wie das zum Beispiel beim Verdunsten eines Lösungsmittels in einem Klebstoff oder bei der Verhärtung von Zementen stattfindet.

In einer besonderen Ausführungsform werden die Druckplatte und der Schichtträger dergestalt relativ zueinander positioniert, dass die Formkörperschicht auf der Druckplatte den Schichtträger oder die ältere Formkörperschicht berührt und auf dem Schichtträger respektive relativ zu den älteren Formkörperschichten exakt so ausgerichtet wird, wie es für die Herstellung des gewünschten Formkörpers notwendig ist.

In einer besonderen Ausführungsform ist die Schichtdicke jeder Formkörperschicht konstant.

In einer alternativen besonderen Ausführungsform sind die Schichtdicken der einzelnen gemeinsam aufgetragenen Formkörperschichten variabel. Die Verwendung eines generativen Herstellungsverfahrens erlaubt es, derartige Ausführungsformen in besonders vorteilhafter und flexibel anwendbarer Weise zu realisieren.

Bei Verwendung eines formgebenden Werkzeugs könnte beispielsweise ein formgebendes Werkzeug gewählt werden, welches Ausnehmungen zur Definition von einer Mehrzahl an unterschiedlichen Formkörperschichten und/oder Teilbereichen davon aufweist. Alle diese Formkörperschichten und/oder Teilbereiche davon können über die gleiche Schichtdicke verfügen. Das formgebende Werkzeug kann aber auch so ausgestaltet sein, dass es unterschiedliche Schichtdicken aufträgt. Entsprechend der Wahl der Abfolge der formgebenden Werkzeuge und der entsprechenden Formkörperschichten und/oder Teilbereiche davon können somit besonders komplexe Strukturen aufgebaut werden.

Die Druckplatte kann insbesondere so ausgestaltet sein, dass sie die Übertragung der Formkörperschicht auf den Schichtträger oder die ältere Formkörperschicht präzis positioniert. Somit können auch besonders kleine, filigrane oder verschachtelte Formkörperschichten aufgebaut und als Formkörper gestaltet werden.

In einer besonderen Ausführungsform ist die Druckplatte im Wesentlichen starr. Im Sinne der vorliegenden kann die Druckplatte als im Wesentlichen starr angesehen werden, wenn sie im erfindungsgemässen Betrieb keine nennenswerte Verformung erfährt. In diesem Fall widersteht die Druckplatte material- und/oder konstruktionsbedingt einer Durchbiegung. Dies ist insofern material- und/oder konstruktionsbedingt, als dass der Widerstand gegenüber einem verbiegenden Drehmoment abhängig ist von der Steifigkeit des Materials und der Grösse des Querschnitts der Druckplatte.

In einer Alternative zur eben genannten Ausführungsform ist die Druckplatte als Folie ausgestaltet. In einer solchen Ausführungsform kann das Übertragen der Formkörperschicht(en) von der Folie auf den Schichtträger durch ein Abziehen der Folie bewerkstelligt werden. Ein solches Abziehen würde ein Durchbiegen der Folie in mindestens einer Flächenausdehnung bedeuten und wäre vergleichbar mit dem Abziehen eines Pflasters oder Klebstreifens. Durch das besagte Verbiegen könnte die Formkörperschicht besser abgelöst werden. Insbesondere eine bereits vernetzte und/oder gehärtete Formkörperschicht könnte besser abgelöst werden, indem die Folie von der Kontaktfläche der Formkörperschicht abgezogen wird. Ein solches Abziehen kann zum Beispiel durch die Materialwahl der Folie ermöglicht werden, und/oder eine entsprechend dünn gewählte Schichtdicke. Bevorzugt beträgt die Schichtdicke der Folie weniger als 2'000 µm, insbesondere 10 - 2'000 µm, besonders bevorzugt 50 - 500 µm, im Speziellen 50 - 200 µm, ganz besonders bevorzugt 100 µm.

In dieser besonderen Ausführungsform kann weiter von Vorteil sein, wenn die Folie bei der Übertragung auf den Schichtträger starr gehalten wird. Bevorzugt wird die Folie dazu auf eine starre Unterlage gelegt.

In einer besonderen Ausführungsform ist die Folie durchlässig für Polymerisationsinduzierende elektromagnetische Strahlung, insbesondere durchlässig für UV-Strahlung. Dadurch kann die Aushärtung des Schichtträgers noch im Kontakt mit der Folie erfolgen, die dann anschliessend mit weniger Mühe von der Formkörperschicht abgezogen werden kann. Besonders bevorzugt ist die Folie auf mindestens der Kontaktseite welche die Formkörperschicht trägt mit einer Antihaft-Beschichtung versehen oder besteht aus einem Kunststoff mit entsprechenden Eigenschaften. Geeignete Materialien für eine Anti-haft Beschichtung der Folie sind fluorierte Kohlenwasserstoffe, wie zum Beispiel FEP (fluoriertes Ethylen-Propylen), EFTE (Etylen-Tetrafluorethylen) oder auch Polytetrafluorethylen (Teflon, DuPont). FEP und EFT haben zusätzlich den Vorteil der guten Durchlässigkeit von UV-Strahlung.

Ein weiterer Aspekt der vorliegenden Erfindung betrifft eine Vorrichtung zur Herstellung eines Formkörpers aus mindestens einer Formkörperschicht. Es versteht sich von selbst, dass die entsprechende Vorrichtung mit strukturellen Merkmalen versehen sein kann, um jedwede Kombination und Möglichkeit an oben genannten Verfahrensmerkmalen, welche sich nicht gegenseitig ausschliessen, aufweisen kann.

Grundsätzlich umfasst eine erfindungsgemässe Vorrichtung einen oder mehrere Schichtträger zur Aufnahme mindestens einer Formkörperschicht. Sie umfasst weiter eine oder mehrere Druckplatte(n) und mindestens eine Vorrichtung zur Durchführung eines generativen Fertigungsverfahren, durch welche eine Formkörperschicht oder Teilbereiche davon mit einer definierten Form auf der Druckplatte erzeugbar ist. Dabei sind Druckplatte und/oder Schichtträger so ausgestaltet, dass aufgetragene Formkörperschichten relativ zueinander positionierbar und auf den Schichtträger oder eine bereits auf den Schichtträger vorhandene ältere Formkörperschicht übertragbar sind. Bevorzugt ist die Vorrichtung so ausgestaltet, dass sie eine präzise Ausrichtung der Druckplatte und des Schichtträgers relativ zu einander ermöglicht.

Besonders bevorzugt ist die Vorrichtung zur Durchführung des generativen Fertigungsverfahrens eine in wenigstens zwei Raumdimensionen, insbesondere drei Raumdimensionen, bewegbare Austragungsvorrichtung, im Besonderen ein bewegbarer Druckkopf.

Die Austragungsvorrichtung ist dabei insbesondere in einer zur Druckplatte coplanaren Ebene bewegbar. Optional kann die Druckplatte dabei in einer Richtung senkrecht zur Ebene der Druckplatte bewegbar ausgestaltet werden. Damit können nahezu beliebige Objekte oder Formkörperschichten auf der Druckplatte hergestellt werden. In einer weiteren bevorzugten Ausführungsform ist die Austragungsvorrichtung zusätzlich in einer Richtung senkrecht zur Ebene der Druckplatte bewegbar. Durch derartig bewegbare Austragungsvorrichtungen können auf der Druckplatte nahezu beliebig geformte Objekte ausgebildet werden.

Die Austragungsvorrichtung umfasst insbesondere wenigstens eine Düse zum Austragen des zu verarbeitenden Materials, insbesondere einer plastisch verformbaren Masse. Gemäss einer weiteren vorteilhaften Ausführungsform umfasst die Austragungsvorrichtung mehrere, insbesondere 2 - 256 oder 32 - 128, individuell adressierbare und/oder individuell bewegbare Düsen. Damit kann die Herstellung der Formkörperschicht weiter beschleunigt werden.

Die Austragungsvorrichtung ist im Besonderen so ausgestaltet, dass sie das auszutragende Material in einzelnen Tropfen mit einem Minimalvolumen von 0.1 - 100 pL, insbesondere 1 - 50 pL, austragen kann.

Die Austragungsvorrichtung verfügt mit Vorteil über einen Temperaturkontroller mit welchem eine Temperatur des auszutragenden Materials und/oder einer Düse kontrolliert werden kann.

Besonders bevorzugt handelt es sich bei der Austragungsvorrichtung um einen Tintenstrahldrucker, einen Plotter, einen 2D-Drucker und/oder um einen 3D-Drucker

In einer bevorzugten Ausführungsform ist der Schichtträger so ausgestaltet, dass er im Wesentlichen eben ist und sich kaum deformiert. Im Sinne der vorliegenden Erfindung bedeutet dies, dass der Schichtträger so ausgestaltet sein kann, dass er den Betriebstemperaturen der Vorrichtung, ohne sich plastisch zu verformen, standhält. Ein entsprechender Schichtträger kann zum Beispiel ausreichend dick dimensioniert sein, dass er sich nicht verformt. Die konkreten Dimensionen können an die Ausmasse der Druckplatte resp. der Formschichten angepasst werden.

In einer besonderen Ausführungsform ist die Druckplatte bewegbar angeordnet, insbesondere drehbar angeordnet.

In einer besonderen Ausführungsform ist die Druckplatte für Lichtwellen durchlässig, insbesondere ist die Druckplatte für UV-Licht durchlässig.

In einer besonders bevorzugten Ausführungsform ist die Druckplatte im Wesentlichen aus Quarzglas oder Saphirglas.

In einer bevorzugten Ausführungsform ist die Druckplatte mit mindestens einer haftreduzierenden Oberfläche versehen. Alternativ oder zusätzlich ist die Druckplatte aus einem im Wesentlichen haftreduzierenden Material. Insbesondere ist die Druckplatte mit einer haftreduzierenden Oberfläche versehen, ausgewählt aus der Gruppe bestehend aus: einbrennsilikonisierte Oberfläche, Polysilanbeschichtung, Fluorpolymerbeschichtung, fetthaltige Beschichtung, wachshaltige Beschichtung und/oder Silikatbeschichtung.

In einer besonderen Ausführungsform ist der Schichtträgerso ausgestaltet, dass er auch unter thermischer Belastung, vorzugsweise bei Temperaturen von über 500 °C, besonders bevorzugt über 800 °C eine hohe Steifigkeit und chemische Inertheit aufweist. Besonders bevorzugt ist der Schichtträger im Wesentlichen aus einem Material wie Aluminiumoxid, Korund, Siliziumkarbid oder Saphir.

In einer besonderen Ausführungsform umfasst die Vorrichtung zudem wenigstens ein formgebendes Werkzeug, insbesondere eine Mehrzahl formgebender Werkzeuge. Bevorzugt weist jedes formgebende Werkzeug Ausnehmungen auf resp. ist so ausgestaltet, dass es eine andere Form definiert.

In einer besonderen Ausführungsform ist das formgebende Werkzeug so ausgestaltet, dass in einem Druckvorgang mehrere Formschichten und/oder Teilbereiche davon miteinander gedruckt werden, die dann eine nach der anderen relativ zum Schichtträger respektive den älteren Formschichten ausgerichtet, gehärtet und von der Druckplatte gelöst werden. Das ermöglicht die Zahl unterschiedlicher Druckschablonen oder Drucksiebe zu reduzieren.

In einer besonderen Ausführungsform umfasst die Vorrichtung ein Mittel zum Auftragen eines Haftvermittlers auf eine Formkörperschicht auf dem Schichtträger. Insbesondere umfasst die Vorrichtung eine Sprühvorrichtung, oder eine Rolle oder ein Stempelkissen zum Auftragen eines Haftvermittlers auf eine Formkörperschicht und/oder auf den Schichtträger.

Falls ein formgebendes Werkzeug verwendet wird, umfasst die Vorrichtung in einer besonderen Ausführungsform ein/eine Rakel zum Ausstreichen einer verformbaren Masse auf dem formgebenden Werkzeug, sodass eine Formkörperschicht und/oder Teilbereiche davon durch Ausnehmungen des formgebenden Werkzeugs auf der Druckplatte aufgetragen wird.

In einer besonderen Ausführungsform ist die Druckplatte im Wesentlichen starr. Im Sinne der vorliegenden kann die Druckplatte als im Wesentlichen starr angesehen werden, wenn sie im erfindungsgemässen Betrieb keine nennenswerte Verformung erfährt. In diesem Fall widersteht die Druckplatte material- und/oder konstruktionsbedingt einer Durchbiegung. Dies ist insofern material- und/oder konstruktionsbedingt, als dass der Widerstand gegenüber einem verbiegenden Drehmoment abhängig ist von der Steifigkeit des Materials und der Grösse des Querschnitts der Druckplatte.

In einer besonderen Ausführungsform ist die Druckplatte als Folie ausgestattet, insbesondere ist durch ihre Querschnittsdicke und/oder Materialbeschaffenheit gewährleistet, dass sie in mindestens einer Flächenausdehnung ausreichend flexibel ist, dass eine reversible Durchbiegung möglich ist, so dass die Folie von einer ausgehärteten Formkörperschicht abgezogen werden kann.

In einer besonderen Ausführungsform umfasst die Folie eine Beschichtung auf, welche selbst sehr reaktionsträge ist, und einen geringen Reibungskoeffizienten aufweist. Bevorzugt weist die Beschichtung einen dynamischen Reibungskoeffizienten von weniger als 0,1 auf. In einer besonders bevorzugten Ausführungsform weist das Material einen dynamischen Reibungskoeffizienten auf, der gleich ist dem Haftreibungskoeffizienten des besagten Materials. In einer ergänzenden oder alternativen Ausführungsform besteht die Folie aus einem solchen Material.

Bevorzugt umfasst die Folie, oder besteht sie, aus einem Material bestehend aus der Gruppe der fluorierten Kohlenwasserstoffe, besonders bevorzugt FEP und/oder ETFE.

Ein weiterer Aspekt der vorliegenden Erfindung betrifft die Verwendung eines aus einem erfindungsgemässen Verfahren resultierenden Formkörpers zur Herstellung dreidimensionaler Mikrostrukturen für verfahrenstechnische Anwendungen. Insbesondere können Formkörper mit komplexen Hohlräumen und Kapillaren in ihrem Innern hergestellt werden. Die erzeugten Formkörper können auch vorteilhaft für den Automobilbau, den Flugzeugbau und Windturbinen eingesetzt werden, da sie sich besonders eignen, um Leichtbaustrukturen zu erzeugen.

Da das erfindungsgemässe Verfahren es erlaubt, Materialien mit unterschiedlichen elektrischen Eigenschaften zu kombinieren, können in einer besonderen Ausführungsform Formkörper hergestellt werden, die elektrische Leiterbahnen enthalten. Ausserdem können auch Materialien mit unterschiedlichen magnetischen Eigenschaften, darunter auch permanentmagnetische Materialien verarbeitet werden. Dadurch lassen sich Sensoren, zum Beispiel Temperatursensoren, Drucksensoren und mehr, oder Aktuatoren, zum Beispiel rotierende Elektromotoren oder Linearmotoren, mittels des erfindungsgemässen Verfahrens erzeugen und in Formkörpern integrieren.

Die erfindungsgemässen Formkörper können besonders filigrane Strukturen und Geometrien aufweisen.

Ein weiterer Aspekt der vorliegenden Erfindung sieht die Verwendung der aus dem erfindungsgemässen Verfahren resultierenden Formkörper als Katalysatorträger mit direkt in den Formkörper gedruckten katalytisch aktiven Schichten vor. Dies ermöglicht es, die Schichtdicke der katalytisch aktiven Schicht im Innern von komplexen Formkörpern, wie sie mit dem erfindungsgemässen Verfahren erstellt werden können, präzise vorzugeben. Dadurch können mit dem vorliegenden Verfahren hochselektive chemische Reaktoren realisiert werden. Bevorzugt werden die katalytisch aktiven Schichten durch die Wahl einer entsprechenden plastisch verformbaren Masse in der erforderlichen Schichtdicke aufgetragen.

Weitere mögliche Anwendungsgebiete der durch das erfindungsgemässe Verfahren herstellbaren Formkörper sind nicht abschliessend: mikrostrukturierte Katalysatoren, Wärmetauscher, Strukturen zur Förderung des Stoffaustauschs, Flüssigkeitsverteiler, Separatoren, Sensoren, Aktuatoren, etc.

Insgesamt bietet das erfindungsgemässe Verfahren eine Reihe von Vorteilen. Insbesondere können mit dem erfindungsgemässen Verfahren unterschiedliche Formkörperschichten in einer Ebene kombiniert werden. Dazu ist es besonders geeignet zur Herstellung von Strukturen mit mehreren unterschiedlichen Materialien. Die Oberfläche der Druckplatte kann so gewählt werden, dass das Druckbild einzelner Formkörperschichten insbesondere bei der Verwendung von Druckschablonen aber auch bei Drucksieben besonders gut wird und dadurch der ganze Formkörper besonders genau abgebildet werden kann. Zudem ist es mit dem erfindungsgemässen Verfahren möglich, einzelne besonders dicke oder besonders dünne Formkörperschichten zu erzeugen. Durch die Möglichkeit, besonders dicke Schichten zu erzeugen, können die Anzahlen einzelner Druckvorgänge reduziert werden, was insgesamt die Effizienz wieder steigert. Die Positionierung der Formkörperschicht findet bei der Übertragung der Formschicht von der Druckplatte auf den Schichtträger statt. Dadurch erübrigt sich ein Erfordernis der präzisen Positionierung der Vorrichtung zur Durchführung des generativen Fertigungsverfahrens und/oder des optionalen formgebenden Werkzeugs relativ zur Druckplatte und des Druckvorgangs. Somit kann der Druckvorgang insgesamt einfacher und effizienter sowie günstiger durchgeführt werden.

Sämtliche besondere Ausführungsformen lassen sich im Rahmen der vorliegenden Erfindung beliebig kombinieren, sofern sie sich nicht gegenseitig ausschliessen.

Im Folgenden wird die Erfindung anhand konkreter Ausführungsbeispiele und Detailbeschreibungen näher erläutert, ohne jedoch auf diese beschränkt zu sein. Im Übrigen ergeben sich aus dieser Detailbeschreibung und der Gesamtheit der Patentansprüche weitere vorteilhafte Ausführungsformen und Merkmalskombinationen der vorliegenden Erfindung.

### Kurze Beschreibung der Zeichnungen

Die zur Erläuterung der Ausführungsbeispiele verwendeten Zeichnungen zeigen schematisch:
- Fig. 1: Ein schematisch vereinfachtes Flussdiagramm eines erfindungsgemässen Verfahrens;
- Fig. 2: Eine leere Druckplatte;
- Fig. 3: Die Generierung von Formkörperschichten in einem gerenativen Fertigungsverfahren mit einem 3D-Drucker;
- Fig. 3a: Die Generierung von Formkörperschichten mittels eines formgebenden Werkzeugs;
- Fig. 4: Die erzeugten Formkörperschichten auf der Druckplatte;
- Fig. 5: Die Positionierung der Druckplatte über dem Schichtträger;
- Fig. 6: Der Schichtträger mit den Formkörperschichten;
- Fig. 7: Ein folgender Druck;
- Fig. 8: Die Übertragung der folgenden Formkörperschichten auf die älteren Formkörperschichten;
- Fig. 9: Der Schichtträger mit zwei Ebenen an Formkörperschichten;
- Fig. 10: Beispiel mit unterschiedlich geformten Formkörperschichten;
- Fig. 11: Beispiel eines komplex aufgebauten Formkörpers aus mehreren Ebenen und Formkörperschichten;
- Fig. 12: zeigt schematisch eine zur Durchführung des erfindungsgemässen Verfahrens geeignete Vorrichtung.

Grundsätzlich sind in den Figuren gleiche Teile mit gleichen Bezugszeichen versehen.

### Wege zur Ausführung der Erfindung

### Beispiel 1

Ein Beispiel einer verformbaren Masse, bei der Photopolymere als Binder eingesetzt werden, sei hier beschrieben. Die Masse ist für die Herstellung von keramischen Strukturen basierend auf Aluminiumoxid gedacht. Sie besteht zu rund 80 % der Masse aus Aluminiumoxidpulver, einer Qualität für hochwertige technische Keramik und einer mittleren Korngrössen von wenigen Mikrometern. Als Binder wird Hexane-1,6-Diol-Diacrylat eingesetzt. Zur Steuerung der rheologischen Eigenschaften werden kleine Mengen von geeigneten Dispersionshilfsmitteln hinzu gegeben. Als Photoinitiator wird 0.5% 2,2-Dimethoxy-2-Phenylacetophenone beigemischt.

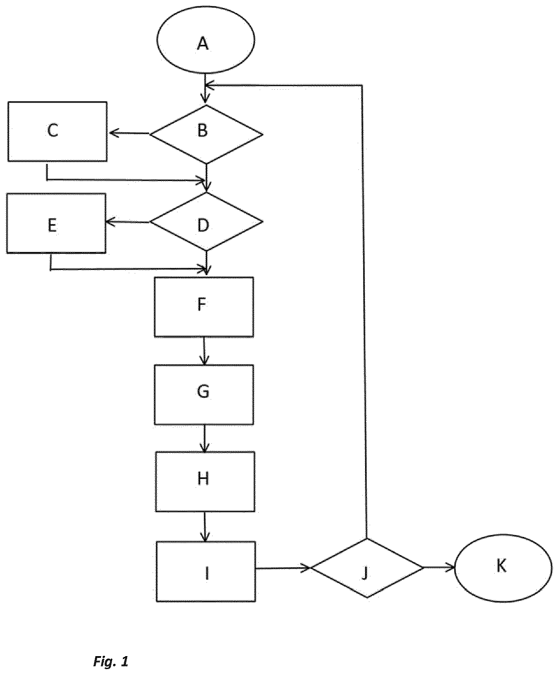

In der Fig. 1 ist eine Durchführung des erfindungsgemässen Verfahrens exemplarisch als Flussdiagramm dargestellt. Zunächst wird ein Schichtträger zur Aufnahme der Formkörperschicht und des resultierenden Formkörpers bereitgestellt A.

Der Schichtträger kann im vorliegenden Beispiel aus einer ebenen Saphirglasplatte mit einer Schichtdicke von 2 mm gebildet sein. In einem ersten Schritt kann nun auf die Oberfläche des Schichtträgers ein dünner Film eines Haftvermittlers aufgetragen werden, damit später die Benetzung und dadurch auch die Verbindung zwischen dem Schichtträger und der neuen Formschicht besser wird. Dazu kann ein Stempelkissen, eine Rolle oder eine Sprühdüse verwendet werden C. Dieser Schritt ist aber nicht zwingend und kann in einigen Fällen weggelassen werden B.

Weiter wird eine Druckplatte bereitgestellt. Damit später der Schritt I besser durchgeführt werden kann, wird die Oberfläche der Druckplatte so modifiziert, dass die Haftung der ausgehärteten Formkörperschicht darauf nur sehr gering ist. Dazu können verschiedene Techniken eingesetzt werden. Geeignete Massnahmen zur Reduktion der Haftung der Formkörperschicht sind zum Beispiel eine Einbrenn-Silikonisierung, eine dünne Beschichtung mit synthetischen Wachsen, eine Beschichtung mit Polydimethylsiloxan oder anderen Polysilanen, eine dünne fetthaltige Schicht oder eine dünne Silikatschicht. Einige der beschriebenen Verfahren zur Reduktion der Haftung der Formkörperschicht auf der Druckplatte erfordern eine regelmässige Wiederholung der Behandlung der Druckplatte vor einzelnen Durchgängen oder vor jedem Durchgang. Falls das der Fall ist, wird die Druckplatte geeignet für den Druck vorbereitet D, E.

Auf diese Druckplatte wird nun die verformbare Masse mittels eines handelsüblichen und in drei Raumdimensionen verfahrbaren 3D-Druckers in einer vordefinierten Struktur in mehreren Lagen aufgetragen. Die aufzutragende Struktur liegt dabei als Datenmodell in einer Steuereinheit des 3D-Druckers vor. Der 3D-Drucker verfügt dabei über eine Austragungsvorrichtung in Form eines Druckkopfs mit einer temperaturkontrollierten Düse. Beim Druckkopf kann es sich beispielsweise um ein Gerät vom Typ Cyberjet®2 der Firma Musashi-Engineering (Japan) handeln.

Ebenfalls möglich ist es, auf die Druckplatte mittels einer Schablone, welche Ausnehmungen in der Form der bei diesem Druckvorgang resultierenden Formkörperschicht oder Teilbereich davon aufweist, die plastisch verformbare Masse aufzutragen. Dazu wird die Schablone im Wesentlichen mit der plastisch verformbaren Masse gefüllt und mittels eines Rakel aufgestrichen, sodass ein Durchdruck durch die Schablone auf die Druckplatte stattfindet. Danach wird die Schablone entfernt.

Die Druckplatte und der Schichtträger werden anschliessend relativ zueinander exakt positioniert, so dass deren Abstand der gewünschten Schichtdicke entspricht und dass die Formkörperschicht auf dem Schichtträger exakt wie gewünscht ausgerichtet ist G. Dies geschieht so, dass die Formkörperschicht den Schichtträger physisch kontaktiert. Eine Möglichkeit, das durchzuführen, ist, die Druckplatte im Wesentlichen um 180° zu drehen und über den fest montierten Schichtträger auszurichten. Eine andere Möglichkeit ist es, mit einer fest montierten Druckplatte zu arbeiten und den Schichtträger darüber zu positionieren.

Die Masse, die die Formkörperschicht bildet, wird nun ausgehärtet H. Bei Massen, die auf Photopolymeren basieren, geschieht dies zum Beispiel durch die Strahlen einer Lampe, deren Licht die Wellenlängen enthält, die den Photoinitiator anregen, durch die transparente Druckplatte hindurch. Häufig liegt der für diese Anregung relevante Wellenlängenbereich bei sehr kurzwelligen Frequenzen im ultravioletten Bereich des Lichtspektrums. Beim Photoinitiator des oben genannten Beispiels, 2,2-Dimethoxy-2-Phenylacetophenone liegt die relevante Wellenlänge zum Beispiel bei 280nm. Als transparente Druckplatte kommt in diesem Fall eine Quarzglasplatte oder eine Saphirglasplatte in Frage, die sowohl die notwendige Stabilität und Robustheit als auch eine genügende Transparenz gegenüber von Licht im ultravioletten Wellenlängenbereich aufweisen. Bei anderen verformbaren Massen kann der Aushärtungsschritt durch thermisch induzierte Polymerisation oder durch thermisch beschleunigte physikalische Trocknung der Masse erfolgen.

Nach der Aushärtung haftet die Formkörperschicht am Schichtträger. Danach wird die ausgehärtete Schicht von der Druckplatte gelöst und dadurch die Formkörperschicht von der Druckplatte auf den Schichtträger übertragen I.

Zur Erleichterung des Ablösens der Formkörperschicht von der Druckplatte wurde die Oberfläche der Druckplatte so modifiziert, dass die Formkörperschicht an ihr nur sehr wenig haftet (siehe Schritt C). Die Haftung der Formkörperschicht am Schichtträger ist deswegen deutlich stärker als an der Druckplatte und bei der Trennung bleibt die Formkörperschicht auf dem Schichtträger respektive auf den älteren Formkörperschichten.

Wird der Druck fortgesetzt, das heisst, sind weitere Formkörperschichten vorgesehen J, so beginnt der Prozess wieder bei Schritt B. Ist dies der zweite oder spätere Druck, so werden die Druckplatte und der Schichtträger so relativ zueinander positioniert, dass die aktuelle Formkörperschicht die ältere Formkörperschicht kontaktiert. Selbstverständlich ist es auch möglich, Formkörperschichten benachbart zu übertragen, das heisst, sodass auch die aktuelle Formkörperschicht den Schichtträger kontaktiert. Dies ist insbesondere dann sinnvoll, wenn man Formkörperschichten aus verschiedenen Materialien, aber mit verschiedenen Schablonen drucken will.

Auch mit der zweiten oder folgenden Formkörperschicht wird nun auf die ältere Formkörperschicht wahlweise eine dünne Schicht Haftvermittler aufgetragen, so dass sich eine vollständigere Benetzung der älteren Formkörperschicht durch die neue ergeben wird C.

Auch mit der zweiten oder folgenden Formkörperschicht wird nun die Druckplatte wahlweise so vorbehandelt, dass sich die Formkörperschicht davon später leicht lösen lässt E.

Wurden alle gewünschten Formkörperschichten erzeugt, ausgehärtet und auf den Formkörperträger übertragen, wird der Prozess beendet K. Je nach verwendeter verformbarer Masse resp. nach dem Material, aus dem das fertige Teil bestehen soll, muss der so auf dem Schichtträger erzeugte Formkörper bestehend aus mindestens einer Formkörperschicht abschliessend noch einer thermischen Behandlung, zum Beispiel eine Sinterung oder eine Pyrolyse, zugeführt werden.

Die Anzahl der Durchläufe H wird von der gewünschten Anzahl Formkörperschichten bestimmt. Dabei kann der ganze Prozess computergesteuert ablaufen. Das heisst, eine Vorrichtung kann mit einem Rack mit einer bestimmten definierten Anzahl Schablonen ausgestaltet sein, um eine definierte Abfolge an Druckvorgängen durchzuführen. Diese Vorrichtung kann modular ausgestaltet sein, wodurch die entsprechenden Werkzeuge flexibel ausgetauscht werden können.

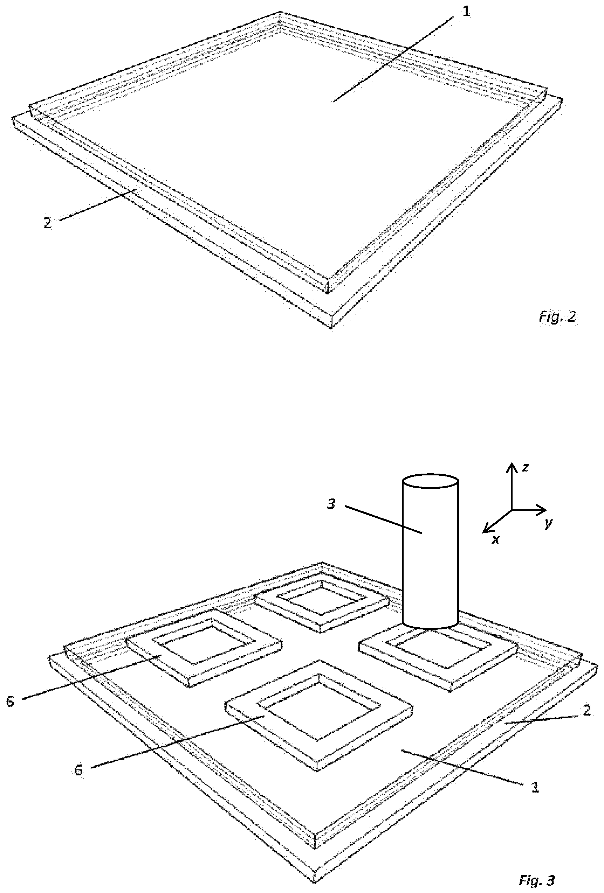

In den Fig. 2 bis 11 wird die Durchführung des Verfahrens nochmals schrittweise anhand der einzelnen Verfahrensschritte exemplarisch illustriert.

Fig. 2 zeigte eine zur Verwendung im erfindungsgemässen Verfahren geeignete Druckplatte 1. Die Druckplatte 1 ist aus einem Quarzglas und verfügt über einen Rahmen 2.

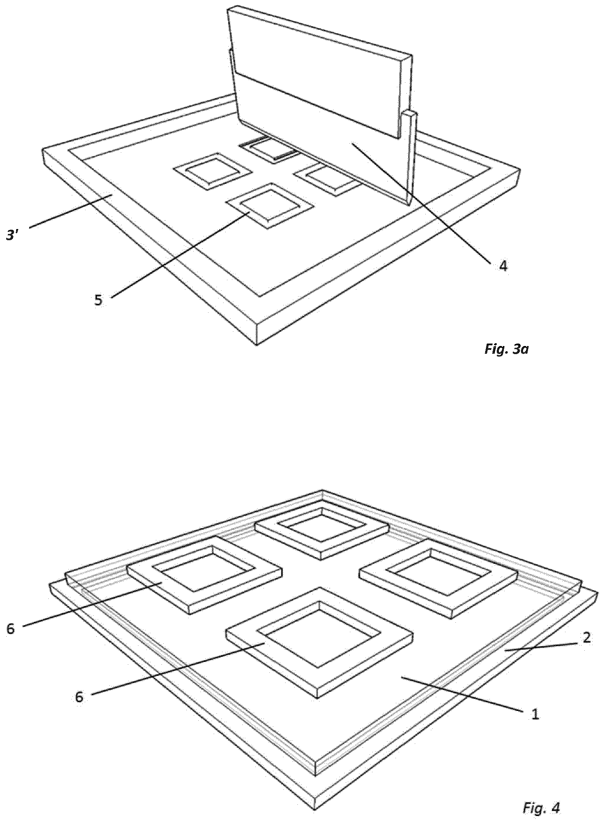

Fig. 3 zeigt die Situation während der Herstellung von vier rahmenförmigen Formkörperschichten 6 auf der Druckplatte 1. Hierbei wird ein Druckkopf 3 eines 3D-Druckers verwendet, welcher wie vorstehend im Zusammenhang mit Fig. 1 beschrieben ist. Der Druckkopf 3 ist in drei Raumrichtungen x, y und z verfahrbar (in der Ebene coplanar zur Druckplatte 1 sowie senkrecht dazu) und gibt die vorstehend genannte plastisch verformbare Masse derart aus, dass einzelne Formkörperschichten 6 Lage für Lage aufgebaut werden.

Fig. 3a zeigt eine Möglichkeit, wie entsprechende Formkörperschichten oder Teilbereiche davon mit einem formgebenden Werkzeug aufgetragen werden können. Mittels einer Schablone 3' wird dabei eine plastisch verformbare Masse (nicht gezeigt) durch die Ausnehmungen 5 mit Hilfe eines Rakel 4 auf die in der Fig. 2 dargestellte Druckplatte 1 aufgetragen. Es entsteht ein Druckbild, welches eine Formkörperschicht des zu erzeugenden Formkörpers bildet.

In der Fig. 4 ist die entsprechend bedruckte Druckplatte 1 dargestellt. Darauf sind die vier identischen Formkörperschichten 6 gezeigt, welche durch den 3D-Drucker hergestellt wurden. Wird eine Schablone verwendet, entsprechen die Formen der Formkörperschichten 6 den Ausnehmungen 5 der Schablone 3'.

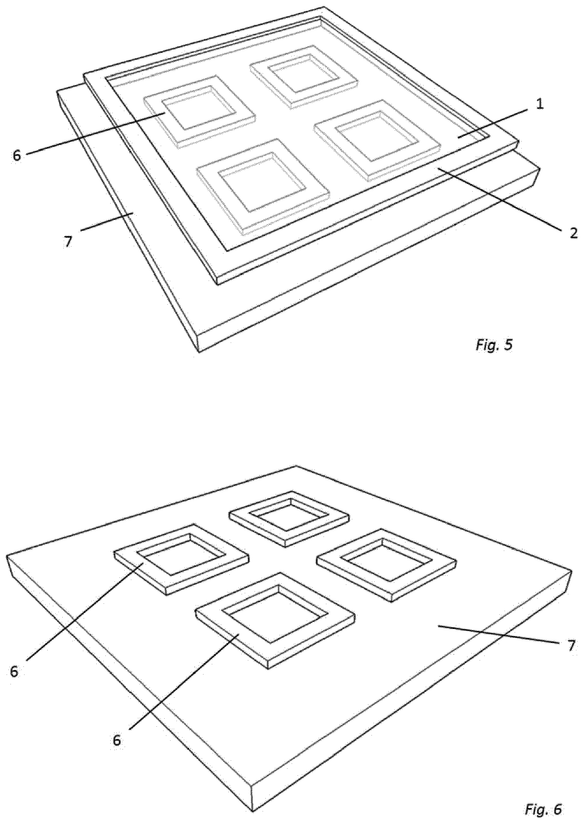

In der Fig. 5 wird gezeigt, wie die Druckplatte 1 nun mitsamt den Formkörperschichten 6 über den Schichtträger 7 positioniert wird, dergestalt, dass die Formkörperschichten 6 den Schichtträger 7 kontaktieren. In dieser Position werden die Formkörperschichten zwischen der Druckplatte und dem Schichtträger ausgehärtet.

In der Fig. 6 ist der entsprechende Schichtträger 7 mit den nun darauf befindlichen Formkörperschichten 6 gezeigt, nachdem die Druckplatte von der ausgehärteten Formschicht abgelöst wurde. Inzwischen wurde die Druckplatte 1 erneut bereitgestellt.

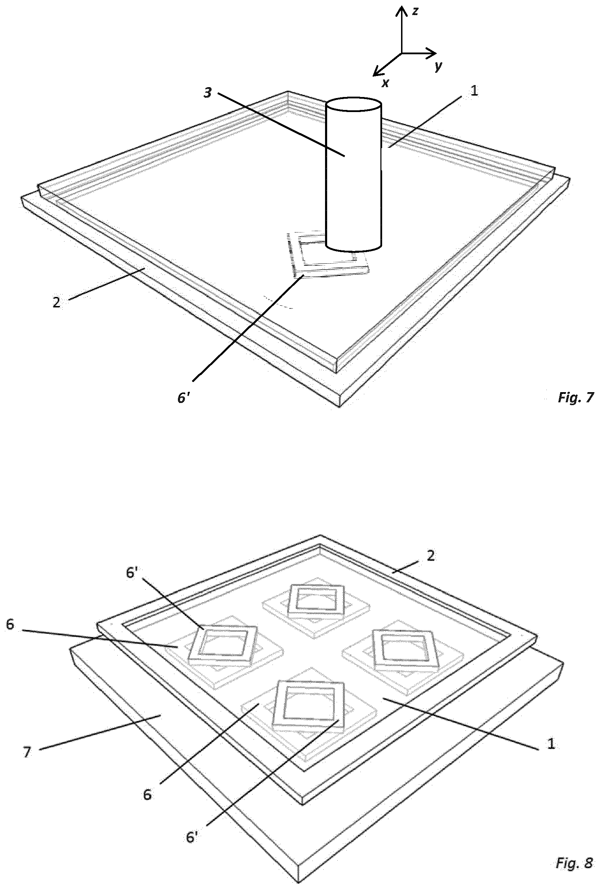

In der Fig. 7 ist der Aufbau von weiteren Formkörperschichten 6' gezeigt. Diese werden wiederum durch den Druckkopf 3 des 3D-Druckers erzeugt. Im Gegensatz zu den Formkörperschichten 6 aus Fig. 3 sind die rahmenförmigen Formkörperschichten 6' gegenüber den Kanten der Druckplatte 1 nun um ca. 45° gedreht.

Zur Herstellung der Formkörperschichten 6' oder Teilbereichen davon kann auch eine weitere Schablone mit einem entsprechenden Ausnehmungsmuster verwendet werdenbei welchem analog zu Fig. 3a mittels eines Rakel 4 die plastisch verformbare Masse (nicht gezeigt) auf die Druckplatte 1 aufgedruckt wird.

Dies erneut bedruckte Druckplatte wird nun ebenfalls über dem Schichtträger 7 positioniert, was in der Fig. 8 dargestellt ist. Die Formkörperschichten 6' werden dabei mit den älteren Formkörperschichten 6 kontaktiert. In diesem Zustand werden die Formkörperschichten 6' ausgehärtet. Bei den Prozessschritten der Aushärtung der Fig. 5 und 8 kann ein Polymerisationsschritt einfach durchgeführt werden, indem Licht der entsprechend erforderlichen UV-Wellenlänge durch die transparente Druckplatte 1 auf die zu härtenden Formkörperschichten 6, 6' beaufschlagt wird.

Die Formkörperschichten 6' gehen mit den älteren Formkörperschichten 6 Verbindungen ein, sodass der resultierende Formkörper im Wesentlichen einstückig ist. Die Verbindungen können materialschlüssig sein. Es kann auch zu Vernetzungen bei bestimmten Materialien kommen.

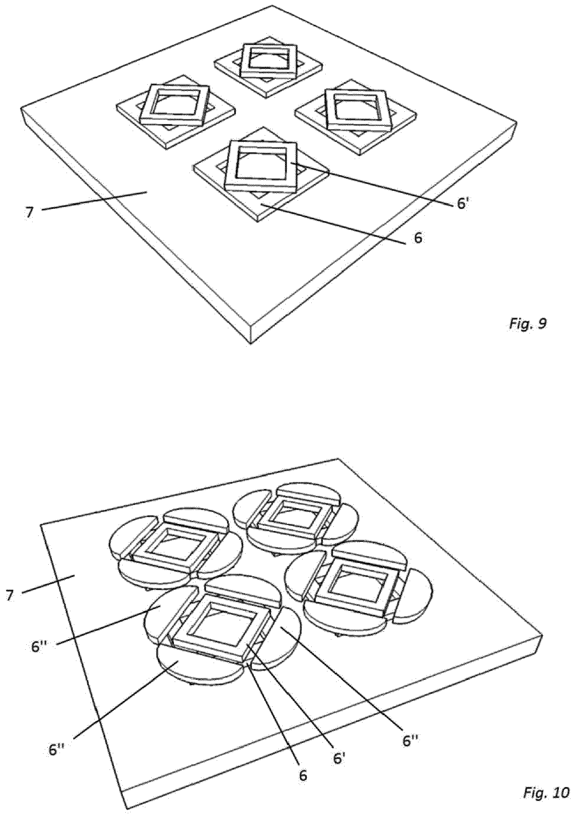

In der Fig. 9 ist der Schichtträger 7 mit mittlerweile vier Formkörpern dargestellt, welche zwei Ebenen aufweisen und aus zwei integral miteinander verbundenen Formkörperschichten 6, 6' bestehen.

Die vorangegangenen Schritte können beliebig oft wiederholt werden. Auch ist es nicht zwingend erforderlich, dass die aktuellen Formkörperschichten aufbauend auf die älteren Formkörperschichten positioniert werden.

Am Beispiel der Fig. 10 sind vier Formkörper gezeigt, bei denen die Formkörper aus insgesamt drei Formkörperschichten 6, 6', 6" bestehen, welche jeweils in einem Druckvorgang erzeugt wurden. Insgesamt bestehen die Formkörper aber aus lediglich zwei Schichtebenen.

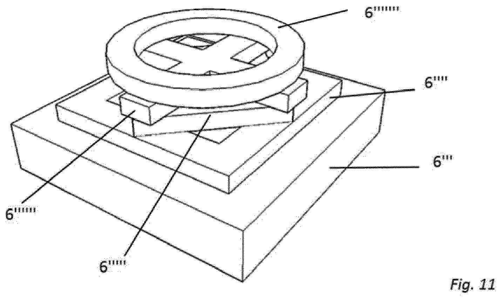

In der Fig. 11 ist exemplarisch ein Formkörper mit fünf Schichtebenen gezeigt, welcher aus fünf Formkörperschichten 6"', 6"", 6""', 6""", 6"""' besteht.

Grundsätzlich sind die einfachen geometrischen Strukturen in den Figuren lediglich zu Anschauungszwecken so gewählt. Grundsätzlich sind den Formkörperschichten und ihren Ausgestaltungen keine Grenzen gesetzt.

Geeignet ist das erfindungsgemässe Verfahren auch zur Herstellung dreidimensionaler Formkörper, wie sie in der WO 2014/043823 A1 gezeigt sind. Diese Formkörper verfügen über mehrere stegweise übereinander gelagerte Formkörperschichten.

Die Formkörperschichten der vorliegenden Erfindung können Schichtdicken von 10 µm bis zu 50 mm aufweisen. Besonders bevorzugt weisen sie Schichtdicken von zwischen 50 und 3000 µm auf. Insgesamt kann ein erfindungsgemässer Formkörper Aussenabmessungen von zwischen 1 mm und 5000 mm, insbesondere zwischen 4 und 500 mm, insbesondere zwischen 10 und 300 mm, insbesondere um die 50 mm aufweisen, je nach Anwendung. Diese Grössen sind besonders für die Herstellung von Mikromischern und Katalysatoren geeignet. Für grössere Bauteile in Leichtbauweise können die entsprechenden Dimensionen grösser sein.

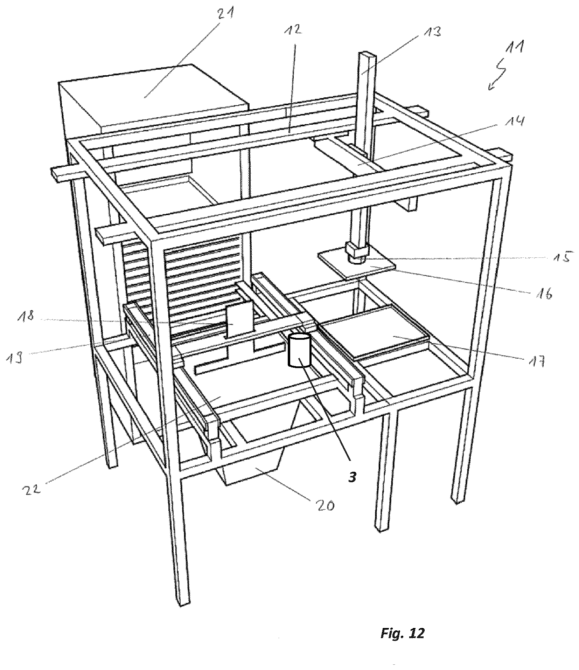

In der Fig. 12 wird exemplarisch eine zur Durchführung des erfindungsgemässen Verfahrens geeignete Vorrichtung 11 schematisch dargestellt. Die Vorrichtung 11 umfasst im Wesentlichen einen Rahmen, welcher die entsprechenden Führungen aufweist, um die bewegbaren Teile der Vorrichtung zu bedienen. Ein Schienensystem dient dazu, einen Schichtträger 16 zu positionieren. Dieses Schienensystem umfasst eine X-Achse des Positionierungssystems 12, eine Y-Achse des Positionierungssystems 14 und eine Z-Achse des Positionierungssystems 13. Zusätzlich ist der Schichtträger 16 über eine gelenkig gelagerte Rotationsverbindung 15 mit der Z-Achse des Positionierungssystems 13 verbunden. Dies ermöglicht dem Schichtträger in allen Achsen bewegbar die notwendige Positionierung einzunehmen, um das erfindungsgemässe Verfahren durchzuführen.

Ein Druckkopf 3 eines 3D-Druckers mit einem Vorratsbehälter für die zu verwendende Masse (nicht gezeigt) ist über drei in Fig. 12 nicht dargestellte an der Vorderseite der Vorrichtung angeordnete mechanische Achsen (analog den Achsen 12, 13, 14), in allen drei Raumrichtungen über die Druckplatte (nicht gezeigt) bewegbar.

Zudem kann ein formgebendes Werkzeug in einem Schablonenmagazin 21 gelagert werden. Durch dieses Schablonenmagazin 21 ist es möglich, eine Reihe von vordefinierten formgebenden Werkzeugen, wie zum Beispiel Schablonen oder Siebe, vorzubereiten. Im Betrieb übernimmt eine Wechselvorrichtung das Herausfahren der Schablonen 22 (beispielhaft) über die Druckplatte (nicht gezeigt). Eine Rakel 18 ist über der Schablone 22 in Position, um die entsprechende Masse, welches aus einem automatischen Dispenssystem (nicht gezeigt) aufgetragen wird, auszustreichen.

Gleichzeitig kann der Schichtträger 15 mittels eines Stempelkissens 17 mit einem entsprechenden Haftvermittler imprägniert werden. Das Positionierungssystem des Schichtträgers 16 kann mittels eines Visionssystems, bestehend aus Kamera, Objektiv und Analysesoftware, bestimmt werden. Dieses System ist in der vorliegenden Darstellung der Einfachheit halber nicht gezeigt. Ist der Druckvorgang abgeschlossen, wird der Druckkopf 3 des 3D-Druckers in eine Neutralstellung bewegt und/oder eine verwendete Schablone wieder über die Führungen 19 des automatischen Wechselsystems in das Magazin 21 zurückgeschoben.

Nun kann der Schichtträger 16 mittels des Positionierungssystems auf die Druckplatte abgesenkt und exakt ausgerichtet werden. Ein UV-Strahler 20 kann nun durch die transparente Druckplatte die Polymerisation und Aushärtung initiieren. Sobald die Aushärtung abgeschlossen ist, kann der Schichtträger 16 wieder abgehoben werden. Durch diese Bewegung wird im vorliegenden Beispiel die Formkörperschicht von der Druckplatte abgelöst und bildet auf dem Schichtträger 16 eine ältere Formkörperschicht.

Diese hier dargestellte Vorrichtung ist lediglich exemplarisch gezeigt und kann mit mehreren Druckplatten mit dazugehörigen Schablonenwechselvorrichtungen für den gleichzeitigen Druck mehrerer Bauteile ausgebaut werden.

## Patentansprüche

1. Verfahren zur Herstellung von Formkörpern aus mindestens einer Formkörperschicht, umfassend die Schritte
a) Bereitstellen eines Schichtträgers zur Aufnahme mindestens einer Formkörperschicht;
b) Erzeugen einer Formkörperschicht auf einer Druckplatte, wobei die Formkörperschicht wenigstens teilweise, insbesondere vollständig, durch ein generatives Fertigungsverfahren hergestellt wird;
c) Positionieren von Druckplatte und/oder Schichtträger respektive einer älteren Formkörperschicht relativ zueinander, insbesondere Kontaktieren der Formkörperschicht mit dem Schichtträger oder einer älteren Formkörperschicht;
d) Aushärten der Formkörperschicht so dass sie selbst zu einer älteren Formkörperschicht wird oder mit einer solchen einen Verbund bildet und Übertragen der Formkörperschicht(en) von der Druckplatte auf den Schichtträger;
e) Eventuell Bereitstellen der Druckplatte zur Aufnahme weiterer Formkörperschichten und wiederholen der Schritte b) bis d).

2. Verfahren gemäss Anspruch 1, wobei das generative Fertigungsverfahren mit einem in wenigstens zwei Raumdimensionen, insbesondere drei Raumdimensionen, bewegbaren Austragungsvorrichtung, im Besonderem einem bewegbaren Druckkopf, durchgeführt wird.

3. Verfahren gemäss einem der Ansprüche 1 bis 2, wobei die ältere Formkörperschicht auf dem Schichtträger oder der Schichtträger selbst mit einem Haftvermittler versehen wird, bevor eine nächste Formkörperschicht darauf übertragen wird.

4. Verfahren gemäss einem der Ansprüche 1 bis 3, wobei in Schritt b) eine plastisch verformbare Masse auf die Druckplatte zur Bildung der Formkörperschicht aufgetragen wird, insbesondere wird als verformbare Masse eine Paste mit thixotropen Eigenschaften verwendet.

5. Verfahren gemäss einem der Ansprüche 1 bis 4, **dadurch gekennzeichnet dass** das Verfahren nach Schritt d) noch den Schritt folgenden Schritt umfasst:
f) Ablösen der Druckplatte von der ausgehärteten Formkörperschicht;
und/oder **dadurch gekennzeichnet dass** der Formkörper gesintert wird, insbesondere nach Abschluss des Aufbaus des Formkörpers gesintert wird.

6. Verfahren gemäss einem der Ansprüche 1 bis 5, wobei das Aushärten einen Polymerisationsschritt umfasst, insbesondere einen Polymerisationsschritt ausgewählt aus der Gruppe der photoinduzierten, thermoinduzierten oder chemoinduzierten Polymerisation umfasst, und/oder wobei die Aushärtung der Formkörperschicht durch einen physikalischen Prozess erfolgt, wie zum Beispiel durch Trocknung und/oder Abkühlung.

7. Verfahren nach einem der Ansprüche 1 bis 6, wobei die Druckplatte als Folie ausgestaltet ist und das Übertragen der Formkörperschicht(en) von der Druckplatte auf den Schichtträger ein Abziehen der Folie umfasst.

8. Verfahren nach einem der Ansprüche 1 bis 7, wobei die Formkörperschicht in Schritt b) teilweise durch ein generatives Fertigungsverfahren und teilweise durch ein formgebendes Werkzeug auf die Druckplatte aufgetragen wird.

9. Vorrichtung (11) zur Herstellung eines Formkörpers aus mindestens einer Formkörperschicht, insbesondere eine Vorrichtung zur Durchführung eines Verfahrens gemäss einem der Ansprüche 1 bis 8 umfassend:
a) Einen Schichtträger (16) zur Aufnahme mindestens einer Formkörperschicht;
b) Eine Druckplatte, und
c) Eine Vorrichtung zur Durchführung eines generativen Fertigungsverfahrens, durch welches eine Formkörperschicht oder Teilbereiche davon mit einer definierten Form auf der Druckplatte erzeugbar ist, und
wobei die Druckplatte und/oder der Schichtträger (16) so ausgestaltet sind, dass eine auf der Druckplatte aufgetragene Formkörperschicht relativ zum Schichtträger (16) positionierbar und auf den Schichtträger (16) oder eine bereits auf dem Schichtträger (16) vorhandene ältere Formkörperschicht übertragbar ist, insbesondere sind Druckplatte und/oder der Schichtträger (16) so ausgestaltet, dass die Formkörperschicht im Kontakt mit dem Schichtträger (16) und/oder einer älteren Formkörperschicht aushärtbar ist und durch Ablösen der Druckplatte auf den Schichtkörper (16) übertragbar ist.

10. Vorrichtung (11) gemäss Anspruch 9, wobei die Vorrichtung zur Durchführung des generativen Fertigungsverfahrens eine in wenigstens zwei Raumdimensionen, insbesondere drei Raumdimensionen, bewegbare Austragungsvorrichtung, im Besonderen ein bewegbarer Druckkopf ist, und wobei die Austragungsvorrichtung bevorzugt wenigstens eine Düse zum Austragen des zu verarbeitenden Materials, insbesondere einer plastisch verformbaren Masse, umfasst.

11. Vorrichtung (11) gemäss wenigstens einem der Ansprüche 9 bis 10, wobei die Druckplatte mit mindestens einer haftreduzierenden Oberfläche versehen ist oder im Wesentlichen aus einem haftreduzierenden Material besteht, insbesondere ist die Druckplatte mit einer haftreduzierenden Oberfläche versehen, ausgewählt aus der Gruppe bestehend aus: einbrennsilikonisierte Oberfläche, Fluoropolymer-Beschichtung, Polysilan-Beschichtung, Fetthaltige-Beschichtung, Wachshaltige-Beschichtung, oder Beschichtung aus einer Silikatschicht.

12. Vorrichtung (11) gemäss einem der Ansprüche 9 bis 11, zusätzlich umfassend wenigstens ein formgebendes Werkzeug, insbesondere eine Mehrzahl formgebender Werkzeuge, wobei im Besonderen jedes einzelne formgebende Werkzeug so ausgestaltet ist, dass es eine andere Form definiert.

13. Vorrichtung (11) gemäss einem der Ansprüche 9 bis 12, umfassend ein Mittel zum Auftragen eines Haftvermittlers auf eine Formkörperschicht auf dem Schichtträger, insbesondere umfassend eine Sprühvorrichtung zum Auftragen eines Haftvermittlers auf eine Formkörperschicht auf dem Schichtträger oder eine Rolle und/oder ein Stempelkissen (17) zum Auftragen eines Haftvermittlers auf eine Formkörperschicht auf dem Schichtträger (16).

14. Vorrichtung (11) gemäss einem der Ansprüche 9 bis 13, wobei die Druckplatte als Folie ausgestaltet ist, so dass sie mindestens in einer Abzugsrichtung durchbiegbar ist, insbesondere wobei die Druckplatte als Folie ausgestaltet ist und eine Dicke von weniger als 2'000 µm, insbesondere 10 - 2'000 µm, besonders bevorzugt 50 - 500 µm, im Speziellen 50 - 200 µm, ganz besonders bevorzugt 100 µm, aufweist.

15. Verwendung eines Formkörpers erhältlich aus einem Verfahren gemäss wenigstens einem der Ansprüche 1 bis 8 als statischer Mischer und/oder zur Herstellung einer Leichtbaustruktur.
